# EUROPEAN PATENT SPECIFICATION

(11) **EP 3 636 602 B1**
(45) Date of publication and mention of the grant of the patent: **20.07.2022**
(21) Application number: 18801607.5
(22) Date of filing: 15.05.2018
(51) Int. Cl.: C02F 1/00, B01D 29/15, B01D 29/52, B01D 29/64, B01D 37/02, C02F 103/42

(54) **FILTER FOR PURIFYING LARGE VOLUMES OF WATER**
FILTER ZUR REINIGUNG GROSSER WASSERMENGEN
FILTRE POUR L'ÉPURATION DE VOLUMES D'EAU IMPORTANTS

(30) Priority: 16.05.2017 ES 201730696
(43) Date of publication of application: 15.04.2020
(73) Proprietor: Regfilter, S.L., 39409 San Felices De Buelna (ES)
(72) Inventor: Gómez Vallejo, Jorge, 39409 San Felices De Buelna (ES); Muñiz González, Luis Miguel, 39300 Torrelavega (ES)
(74) Representative: García Gómez, José Donato
(86) International application number: PCT/ES2018/070356
(87) International publication number: WO 2018/211161

(56) References cited:
- CN-Y- 2 354 946
- FR-A1- 2 237 663
- FR-A1- 2 857 883
- US-A- 2 854 142
- US-A- 3 666 097
- US-A- 3 891 551
- US-A1- 2013 319 928

## Description

The object of the present invention is a filter for purifying large volumes of water, which has characteristics aimed at achieving a low cost of life cycle (manufacture, operation and recycling), the possibility of having different models and sizes, the filtering of large amounts of water using a single filter unit and a periodic regeneration of the filtering capacity automatically and with a reduced waste of the amount of water used in regeneration.

### Technical field of the invention.

This invention is applicable in the field of purification of all types of low and medium load polluting waters and mainly of large volumes of water, such as pools, lagoons, ponds or the like.

### State of the art.

Different types of water filters for these types of applications are currently known:
a) Water filters with polyester container:
   these filters have a free shape, vertical or horizontal, of any size and a filtration surface corresponding to their area or section.

These polyester container filters are more economical than steel container filters, and house in their interior filtering means that can be silica, sand or recycled glass-crystal. The water enters the upper part of the container and passes through the filtering means to finally reach final elements, which are installed in the interior of the filtering means (called filter arms, collecting tubes, among other names) with holes or slots of free passage lower than the particle size of the filtering means, allowing the passage of the filtered water but not that of the particles of said filtering means, the filtered water collected finally exiting from the lower part of the container.

The rate of passage of water through the interior of the filter to achieve good filtering quality varies depending on the use of the water and the regulations that affect each case, a suitable rate for most uses being 30 m³/hour per square metre of filtration area.

If silica sand is used, particles larger than 20 microns are retained in the filtering means. When using glass, the retained particles are those with sizes greater than 1 to 5 microns.

These filters require approximately one cleaning per week, reversing the cycle of water passage and for approximately 7 minutes the water enters below and exits together with the dirt upwards towards a drain, resulting in the loss of this water.

Silex sand should be replaced every 3 - 5 years and filter glass does not need to be changed.

In a practical case, using a filter of this type, with a diameter of 2000 mm., a filtration area of 3.14m² and a filtration rate of 30m³/h/m², 94.2 m³/h of filtered water is obtained.

Therefore, with this flow rate, a weekly cleaning of 7 minutes involves 11 m³ of lost water that goes down the drain, every week.

The polyester filter of silica or glass filtering means has certain advantages such as: low cost and diversity of models and sizes, and some disadvantages such as: a lot of water loss during their cleaning; it is necessary to use numerous units for use in large water volumes, for example, to filter 450 m³/h of water five filters of 2000 mm. are needed and in the cleaning there are water losses of 220 m³ of water per drain, per month.

### b) Steel filters with perlite regenerative filtering means:

These filters are much more expensive than a polyester filter and have a vertical circular shape with sizes limited by their main characteristic of having a movable upper part and housing in their interior a movable roof from which hang hundreds of flexible tubes, or hoses, formed by a stainless steel base and coated with polyester mesh that serve as a support for the regenerative filtering means, called perlite, and provide the filter with a large filtration surface, allowing it to work at low water flow rates with large volumes of water.

The water enters through the lower part of the filter and exits through the upper part after passing through the perlite filtering means and through the flexible tubes retaining in its interior any particles of dirt greater than 1 to 5 microns.

The useful filtering surface goes from being the area of the sand filter section perpendicular to the advance of the water, to being the area formed by the perlite that adheres to the hundreds of filter tubes.

The movable roof in its interior has a pneumatic system, called Bump or Bumping because of its ability to move, move up and down inside the filter.

This up and down movement is used to regenerate the perlite that needs to be stirred approximately every 4 hours and renewed approximately once a month.

As the inner roof moves with the hundreds of flexible tubes hanging down, the perlite is detached from these flexible tubes. This up and down movement of the movable roof performs a cleaning, regeneration of the perlite, which allows it to be used for about a month; after this time it is necessary to empty the filter through its drain to remove the used perlite and clean the flexible tubes.

Monthly cleaning of the filter, even if chemical products are used to be automatically introduced in the interior of the filter, additionally requires manual cleaning to leave the flexible tubes perfectly clean. This cleaning is carried out by disassembling a front window of the filter and projecting pressurised water against the flexible tubes; using the rotating movable roof of the filter so as to face all the tubes successively with the window and so that they are cleaned.

Cleaning the hoses with pressurised water and the subsequent rinsing of the interior of the filter involves the discharge through the drain, and consequently the loss of about 20 m³ of water per month.

A steel filter with flexible tubes and perlite regenerative means can have filtration surfaces of up to 150 m² and work at low water flow rates, about 3 m³/hour for each square metre of filtering surface, which makes it possible to obtain a flow rate of about 450 m³/hour of filtered water with a single filter.

150 m² × 3m³/hour/m² = 450 m³/hour filtered by a single filter with a housing diameter of less than 1,600 mm.

These steel filters with perlite regenerative filtering means have the following advantages: a single unit of, for example, 1,600 mm. can filter large flow rates of water, up to 450m³/h.; the monthly cleaning uses very little water, only about 20 m³. And, at the same time, it has the following disadvantages: it needs to be made of steel because of its movable roof and this makes it very expensive; limited sizes due to its mechanical characteristics (movable roof) and the need to have registers and removable elements; and the necessary manual monthly cleaning is difficult and laborious and has to be carried out by trained personnel.

In document US 3891551A a method of cleaning a liquid filter, and filter for performing the method is described, in which compressed air is temporarily introduced into the filter container, producing a first shock which detached the filter deposits from the filter elements; and afterwards, the compressed air is released from the filter container, producing a second shock which breaks up the detached filter deposits. Z Other alternative cleaning methods used in perlite filters are known, for instance, from US3666097A, FR2857883A1, US2013/319928A1 and US2854142A.

### Description of the invention.

The filter for purifying large volumes of water, object of the invention, has characteristics aimed at solving the problems of the aforementioned background and achieving the advantages provided by them; in particular:
- low cost.
- possibility of having diversity of models and sizes.
- that a single unit can filter large volumes of water.
- monthly cleaning using little water and that this is carried out automatically, not manually and without the need for personnel to be specially trained.

With these objectives the filter of the invention has a polyester structure, in order to allow diversity of shapes and sizes at low cost.

For this purpose, a fixed structure without moving parts and without a movable roof, with a large filtration surface and a regenerative filtering means that is the perlite is provided.

This filter comprises at least:
- a polyester tank having a lower part and an upper part separated by a fixed separating roof;
- a collector for the inlet and distribution of water arranged in the lower part of the tank, with the water outlets facing downwards, and connected to a water inlet;
- a lower drain with a valve to remove dirt during cleaning of the filter;
- a cleaning device comprising a cleaning collector arranged above the collector for the inlet and distribution of water, consisting of a ring of tubes with small jets facing the upper area of the filter, said cleaning collector being connected to pump means for pumping pressurised fluid inwards during the cleaning steps thereof;
- a plurality of flexible tubes secured to and suspended from the fixed separating roof, said tubes forming a support for the perlite filtering means;
- a manhole for the assembly and maintenance of interior components;
- an upper opening for the outlet and purge of air provided, on the one hand, with air-detecting sensors connected to a control panel and, on the other hand, with a valve for opening and closing for air evacuation, automatically controlled by the control panel based on the signals provided by the probes and;
- an upper outlet for filtered water.

In one embodiment of the invention the fixed separating roof is formed of reinforced polyester.

The collector for the inlet and distribution of water is facing downwards, i.e. towards the lower end of the filter, so that the incoming water does not forcefully flow into the flexible tubes, or hoses, supporting the perlite.

The pump means for pumping pressurised fluid to the cleaning collector comprise an air source for introducing air during regeneration of the perlite, which is carried out with a certain frequency, about 4 hours, and during an initial step of the monthly cleaning of the filter, and a high pressure pump for introducing pressurised water during a final step of the monthly cleaning, to complete the cleaning of the flexible tubes.

The flexible tubes comprise an inner stiffening element coated with a mesh of polyester braided fibres, carbon fibre or other equivalent material that serves as a support and for retention of the perlite filtering means.

The number of flexible tubes will depend on the amount of water to be filtered, and is unlimited and may be in the order of about 1000 flexible tubes.

As mentioned above, the valve for opening and closing for air evacuation is automatically controlled by the control panel based on the signals provided by the probes to said control panel, which allows said valve to open automatically when the probes detect the presence of air and to close when they detect the presence of water, thus ensuring that the filter remains full of water.

With the characteristics described the filter functions as explained below:
Unfiltered water or water pre-filtered by another device enters the lower part of the filter, passes through the perlite and the flexible tubes and exits through the upper outlet for already filtered water.

To regenerate the perlite, approximately every 4 hours, the control panel automatically activates the air production source for a few minutes, causing the perlite to be detached from the flexible support tubes.

The upper valve removes the air from the filter during and/or after the regeneration cycle.

The monthly cleaning of the filter is carried out effortlessly with the automatic use of the air source and the pump means for pumping pressurised water with fixed and mobile nozzles, which allows reducing the amount of water used in the cleaning, compared to the manual systems currently used.

### Description of the figures.

In order to complement the description that is being carried out and with the purpose of facilitating the understanding of the features of the invention, the present description is accompanied by a set of drawings wherein, by way of a non-limiting example, the following has been represented:

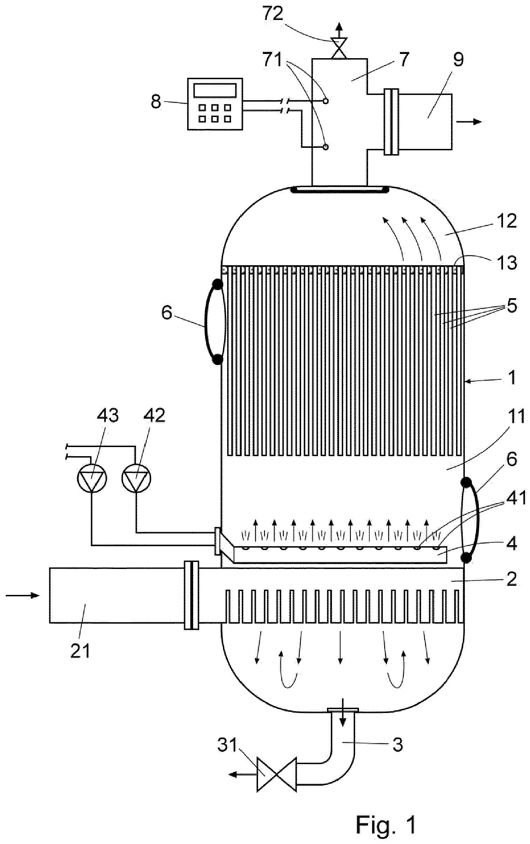

- Figure 1 shows a schematic elevation view of an exemplary embodiment of the filter for purifying large volumes of water according to the invention.

### Preferred embodiment of the invention.

As can be seen in the attached figure, this filter comprises a polyester tank (1), provided with a lower part (11) and an upper part (12) separated by a fixed, reinforced polyester separating roof (13).

In the lower part (11) it has a collector (2) facing downwards for the inlet and distribution of water connected to a water inlet (21); it also has a lower drain (3) with a valve (31) to remove dirt during filter cleaning.

In said lower part (11) is comprised a cleaning device provided with a cleaning collector (4), arranged above the collector (2) for the inlet and distribution of water, and consisting of a ring of tubes with fixed and/or mobile nozzles (41) facing the upper area of the filter, said cleaning collector (4) being connected to pump means for pumping pressurised fluid inwards during the cleaning steps thereof.

Said pump means for pumping pressurised fluid comprise: a source of pressurised air (42) for introducing air during regeneration of the perlite, which is carried out approximately every 4 hours, and during an initial step of the monthly cleaning of the filter, and a water pressure pump (43) for introducing pressurised water during a final step of the monthly cleaning.

These pump means (42, 43) for pumping pressurised fluid are connected to the control panel (8) and are controlled by it automatically for carrying out the cycles of perlite regeneration and the monthly cleaning.

The filter comprises, in the interior of the lower part (11) of the tank, a plurality of flexible tubes (5) secured to the fixed separating roof (13) and suspended therefrom, said flexible tubes forming a support for the perlite filtering means, (not shown).

The tank (1) also comprises manholes (6) for the assembly and maintenance of interior components, an upper opening (7) for the outlet of air provided with air-detecting sensors (71) connected to a control panel (8), and an opening and closing valve (72) for the evacuation of air, automatically controlled by the control panel (8) based on the signals provided by the sensors (71), and an upper outlet (9) for filtered water.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. A filter for purifying large volumes of water comprising:
- a polyester tank (1) having a lower part (11) and an upper part (12) separated by a fixed separating roof (13) and provided of a manhole (6) for the assembly and maintenance of interior components;
- a filter cleaning device;
- a control panel (8);
- a lower drain (3) with a valve (31) to remove dirt during filter cleaning;
- a plurality of flexible tubes (5) secured to and suspended from the fixed separating roof (13), forming a support for the perlite filtering means;
- an upper outlet (9) for filtered water, **comprising:**
- a collector (2) for the inlet and distribution of water to be filtered arranged in the lower part (11) of the tank, with the water outlets facing downwards and connected to a water inlet (21);
- said cleaning device is arranged in the lower part of the tank (1) and comprising a cleaning collector (4) arranged above the collector (2) for the inlet and distribution of water, and consists of a ring of tubes with fixed nozzles and/or movable nozzles (41) facing the upper area of the filter connected to pump means (42, 43) for pumping pressurised fluid into the tank (1) during the cleaning steps thereof; said pump means (42, 43) for pumping pressurised fluid are connected to the control panel (8) and are controlled by it, and comprising:
- a blowing pump (42) that introduces pressurised air during regeneration of the perlite and
- a water pressure pump (43) that introduces pressurised water during a cleaning step;
and an upper opening (7) for the outlet of air provided with air-detecting sensors (71) connected to the control panel (8) and an opening and closing valve (72) for the evacuation of air automatically controlled by the control panel (8) based on the signals provided by the sensors (71) ensuring that the filter remains full of water.

## Patentansprüche

1. Filter zum Reinigen großer Wassermengen, umfassend:
- einen Polyesterbehälter (1) mit einem unteren Teil (11) und einem oberen Teil (12), die durch ein feststehendes Trenndach (13) getrennt sind und mit einem Mannloch (6) zur Montage und Wartung von Innenkomponenten versehen sind,
- eine Filterreinigungsvorrichtung,
- ein Bedienfeld (8);
- eine untere Auslassöffnung (3) mit einem Ventil (31), um während der Filterreinigung Schmutz zu entfernen,
- mehrere flexible Rohre (5), die an dem festen Trenndach (13) befestigt und daran aufgehängt sind, wobei sie eine Halterung für das Perlit-Filtermittel bilden;
- eine obere Auslassöffnung (9) für gefiltertes Wasser, **umfassend:**
- eine Auffangvorrichtung (2) für den Einlass und die Verteilung von zu filterndem Wasser, die im unteren Teil (11) des Behälters angeordnet ist, wobei die Wasserauslassöffnungen nach unten zeigen und mit einer Wassereinlassöffnung (21) verbunden sind;
- wobei die Reinigungsvorrichtung im unteren Teil des Behälters (1) angeordnet ist und eine Reinigungsauffangvorrichtung (4) umfasst, die über der Auffangvorrichtung (2) für den Einlass und die Verteilung von Wasser angeordnet ist und aus einem Ring von Rohren mit feststehenden Düsen und/oder beweglichen Düsen (41) besteht, die dem oberen Bereich des Filters zugewandt sind, der während der Reinigungsschritte davon mit Pumpenmitteln (42, 43) zum Pumpen von unter Druck stehendem Fluid in den Tank (1) verbunden ist; wobei die Pumpenmittel (42, 43) zum Pumpen von unter Druck stehendem Fluid mit dem Bedienpult (8) verbunden sind und von diesem gesteuert werden, und umfassend:
- eine Einblaspumpe (42), die während der Regeneration des Perlits Druckluft einleitet und
- eine Druckwasserpumpe (43), die während eines Reinigungsschritts unter Druck stehendes Wasser einleitet;
und eine obere Öffnung (7) für den Auslass von Luft, die mit Sensoren (71) zum Luftnachweis versehen ist, die mit dem Bedienfeld (8) und einem Öffnungs- und Schließventil (72) für das Evakuieren von Luft verbunden sind, das automatisch durch das Bedienfeld (8) gesteuert wird, basierend auf den Signalen, die von den Sensoren (71) bereitgestellt werden, um sicherzustellen, dass der Filter voller Wasser bleibt.

## Revendications

1. Un filtre pour purifier de grands volumes d'eau comprenant :
- un réservoir en polyester (1) ayant une partie inférieure (11) et une partie supérieure (12) séparées par un toit de séparation fixe (13) et pourvu d'un trou d'homme (6) pour l'assemblage et l'entretien de composants intérieurs ;
- un dispositif de nettoyage du filtre ;
- un panneau de commande (8) ;
- un tuyau d'évacuation inférieur (3) avec une vanne (31) pour éliminer la saleté pendant le nettoyage du filtre ;
- une pluralité de tubes flexibles (5) fixés et suspendus au toit de séparation fixe (13), formant un support pour le moyen de filtrage à la perlite ;
- une sortie supérieure (9) pour l'eau filtrée, **comprenant** :
- un collecteur (2) pour l'entrée et la distribution de l'eau à filtrer disposé dans la partie inférieure (11) du réservoir, avec les sorties d'eau tournées vers le bas et connectées à une entrée d'eau (21) ;
- ledit dispositif de nettoyage est disposé dans la partie inférieure du réservoir (1) et comprend un collecteur de nettoyage (4) disposé au-dessus du collecteur (2) pour l'entrée et la distribution de l'eau, et constitué d'un anneau de tubes avec des douilles fixes et/ou des douilles mobiles (41) faisant face à la zone supérieure du filtre reliés à des moyens de pompage (42, 43) pour pomper du fluide sous pression dans le réservoir (1), pendant les étapes de nettoyage de celui-ci; lesdits moyens de pompage (42, 43) pour pomper du fluide sous pression sont reliés au panneau de commande (8) et sont commandés par celui-ci, et comprennent :
- une pompe de soufflage (42) qui introduit de l'air sous pression, pendant la régénération de la perlite et
- une pompe à pression d'eau (43) qui introduit de l'eau sous pression, pendant une étape de nettoyage ;
et une ouverture supérieure (7) pour la sortie de l'air pourvue de capteurs de détection d'air (71) connectés au panneau de commande (8) et une soupape d'ouverture et de fermeture (72) pour l'évacuation de l'air automatiquement commandée par le panneau de commande (8), sur la base des signaux fournis par les capteurs (71) assurant que le filtre reste plein d'eau.
